# EUROPEAN PATENT APPLICATION

(11) **EP 1 758 124 A1**
(43) Date of publication of application: **28.02.2007**
(21) Application number: 05300692.0
(22) Date of filing: 24.08.2005
(51) Int. Cl.: G11B 33/08

(54) **Disk drive unit**

(71) Applicant: Thomson Licensing, 92100 Boulogne-Billancourt (FR)
(72) Inventor: Pennings, Peter, 4891 VD, Rijsbergen (NL); Poncin, Charles, 4834 EB, Breda (NL); Schmit, Erwin, 2517 TM, Den Haag (NL)
(74) Representative: Arnold, Klaus-Peter

(57) **Abstract**

A disk drive unit comprises a disk casing (1) in which a disk is adapted to be rotated and a mounting frame (5) resiliently connected to said disk casing (1) by a plurality of springs (4). The springs (4) extend from respective points of application (3) at the disk casing (1) towards a common plane which extends through said disk casing (1).

## Description

The present invention relates to a disk drive unit operating on a non-replaceable disk such as a magnetic hard disk (HDD) or on a replaceable disk such as e. g. a CD-Rom, DVD etc. Such disk drive units are used in computer peripherals and in consumer electronics such as video recorders, video DVD players etc. alike.

In recent years, there is an increasing tendency, in particular in the field of consumer electronics, to reduce the height of devices using such disk drives, so that such a device can be installed below a TV set used as a display device for it without substantially raising the display screen of the set, and thus, without noticeably changing the angle under which a user views the display screen.

Conventionally, disk drive units of the type mentioned above have one or more reading/writing heads which are displaceable across the surface of a disk in order to read or record data on the disk. The gap between the head and the surface of a disk is a small fraction of a millimetre in the case of a magnetic disk, since the head has to be very close to the disk surface in order to be able to detect the minuscule magnetic structures which represent the recorded data. If optical recording techniques are used, as in the case of CDs or DVDs, a small gap width is necessary in order to provide for the very tight focusing of the read (or write) beam required for high storage densities, and the gap width has to be controlled within tight limits in order to ensure that the beam focus is exactly at the data recording layer of the disk. If the disk drive unit is subject to shock or vibration, it may be impossible to maintain the gap width at the correct value, causing the read or write process to be interrupted, or, in the worst case, a collision between the head and the disk surface, which may lead to permanent damage of the head and/or the disk.

In order to protect disk and head from excessive accelerations caused by shock or vibration, it has been suggested to mount a disk casing resiliently by means of springs. When the mounting frame is accelerated strongly in case of shock, the springs will transmit only a reduced level of acceleration to the disk casing, thus protecting a disk and a reading/writing head inside. This measure improves the reliability of a disk drive unit, but it has disadvantages in that it tends to make the unit bulky, since the springs extend away from corners of the disk casing in directions parallel to the diagonals of a cube.

This object of the present invention is to provide a disk drive unit which is insensitive to a shock or vibration like a conventional spring-mounted unit without having the bulkiness of conventional units of this type.

The object is achieved by a disk drive unit comprising a disk casing in which a disk is adapted to be rotated and a mounting frame resiliently connected to said disk casing by a plurality of springs, which unit is characterized in that the springs extend from respective points of application at the disk casing towards a common plane which extends through said disk casing. By this design, in a direction perpendicular to the common plane, only small gaps have to be provided at either side of the disk casing in order to allow it to oscillate in case of shock, but beyond this gap no space is required for the springs. Thus, the dimension of the disk drive unit perpendicular to the common plane can be made small, which makes the disk drive unit of the invention particularly suited for installation in a device of reduced height.

In a simple embodiment, the remote ends of the springs may be connected to the mounting frame in said common plane. Preferably, the springs extend across the common plane, so that they can be made longer and can be maintained under tension at any time when vibrating.

A second dimension of the disk drive unit can be reduced, if, the disk casing having front and rear sides perpendicular to the common plane, the springs extend between front and rear planes defined by said front and rear sides.

In this case, according to a first embodiment, the springs extend from their respective points of application at the disk casing towards an intermediate plane between said front and rear planes.

Alternatively, the springs may have the respective points of application at the disk casing adjacent but not coincident to one of said front and rear planes and extend from their respective point of application towards the adjacent one of said front and rear planes.

The common plane should be perpendicular to the axis of rotation of the disk.

One or more vibration absorbers may be provided for absorbing vibrations in the direction of the axis and the directions perpendicular to it.

Further features and advantages of the present invention will become apparent from the subsequent description of embodiments, referring to the appended drawings.
- Fig. 1: is a schematic perspective view of a disk drive unit according to a first embodiment of the invention.
- Fig. 2: is a top view of the disk drive unit of Fig. 1;
- Fig. 3: is a perspective view of a second embodiment of the disk drive unit;
- Fig. 4: is a top view of the embodiment of Fig. 3;
- Fig. 5: is a schematic perspective view of a disk drive unit according to a third embodiment of the invention;
- Fig. 6: shows a modified version of the third embodiment comprising vibration absorbers;
- Fig. 7: is a second modified version comprising vibration absorbers.

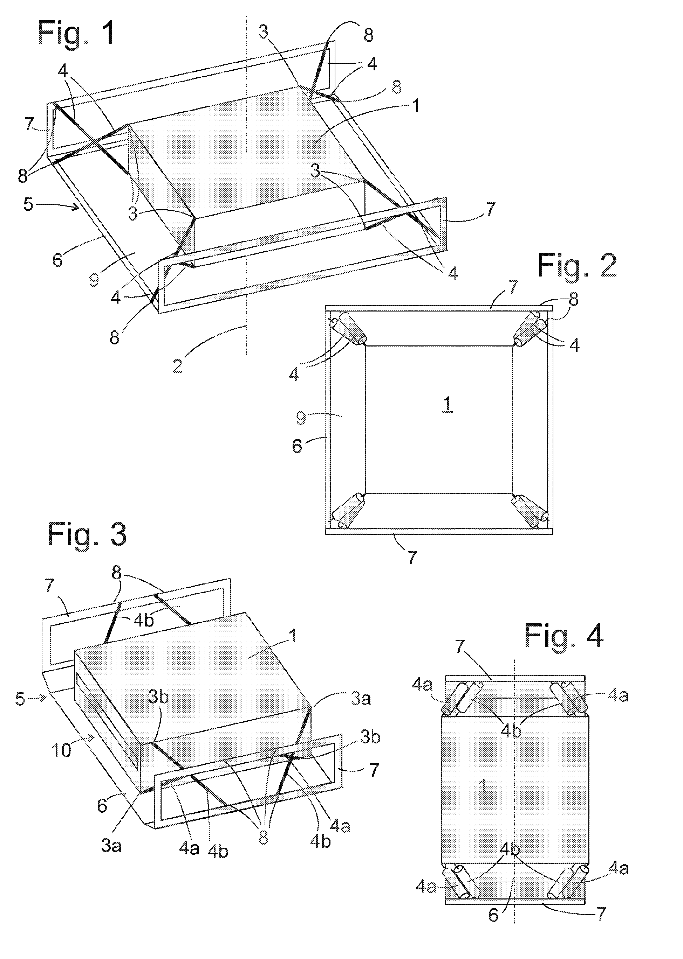

Fig. 1 illustrates a first embodiment of the invention. A disk casing 1 is drawn as a cuboid in this Fig., although, obviously, it might also be of a cylindrical shape or of an intermediate shape between cylindrical and cuboid, as known in the art of hard disk drives. An axis of rotation of a disk installed in casing 1 is represented by dash-dot line 2. The cuboid has eight corners 3, to each of which a tension spring 4 is attached. The tension springs 4 can be in particular coil springs.

The remote ends of tension springs 4 are fixed to a mounting frame 5. In the embodiment shown here, the mounting frame 5 forms a unit together with disk casing 1, which unit may be installed in a device such as a video recorder or the like. Alternatively, of course, the mounting frame 5 might be an integral component of the device, and the disk casing 1 is mounted in the device by installing the tension springs 4. The mounting frame 5 illustrated here has a bottom plate 6 and two side walls 7 at either side of the disk casing 1, but obviously, the mounting frame might have any structure as long as it provides points of application for the remote ends of the tension springs 4. The tension springs 4 have points of application 8 at the mounting frame 5 close to but not coincident with the corners of the side walls 7, so that the springs 4 extend through a horizontal centre plane of the unit, not shown, and cross each other without interfering with each other.

When the disk casing 1 is in its rest position, as shown in Figs 1 and 2, all springs 4 are loaded, so that no spring will become slack when the casing 1 is vibrating. Due to the fact that the springs 4 extend from the respective corners 3 of the disk casing towards the horizontal centre plane thereof, no space for the springs has to be provided above and below the casing 1. The distance between the casing 1 and any other adjacent device components in the direction of axis 2 need therefore not be more than the admissible range of vibration of the casing 1.

The admissible vibration range may be more than the height of the side walls 7, since there is nothing in the mounting frame 5 to prevent the disk casing from moving outwards beyond the upper edges of the side walls 7 or downwards through a large cutout 9 formed in bottom plate 6.

While the embodiment of Fig. 1 and 2 reduces the dimensions of the disk drive unit only in the vertical direction, the second embodiment illustrated in Fig. 3 and 4 achieves a reduction in two dimensions. In this embodiment, the mounting frame 5 has a depth similar to or even, as can be seen in Fig. 4, slightly smaller than that of disk casing 1. A gap 10 between disk casing 1 and the bottom plate 6 of mounting frame 5 limits the amplitude of vibration of the disk casing 1.

One pair of diagonally opposite corners at each lateral side of disk casing 1 form points of application 3a for springs 4a. The other springs 4b have their points of application 3b close to the other pair of corners 3 of the lateral side of the disk casing, but slightly displaced towards a vertical plane represented by a dash-dot line, which extends midway between front and rear sides of casing 1. In this way, adjacent springs 4, 4b are prevented from interfering with each other. Like in the first embodiment, the springs 4a, 4b extend across a horizontal central plane of the disk casing 1 to their respective points of application 8 at the sidewalls 7. The point of application 8 of each spring 4a, 4b at sidewalls 7 is closer to said vertical plane than the points of application 3a, 3b are. In the top view of Fig. 4, the springs 4a, 4b appear to be forming 45° angles with the lateral sides of casing 1.

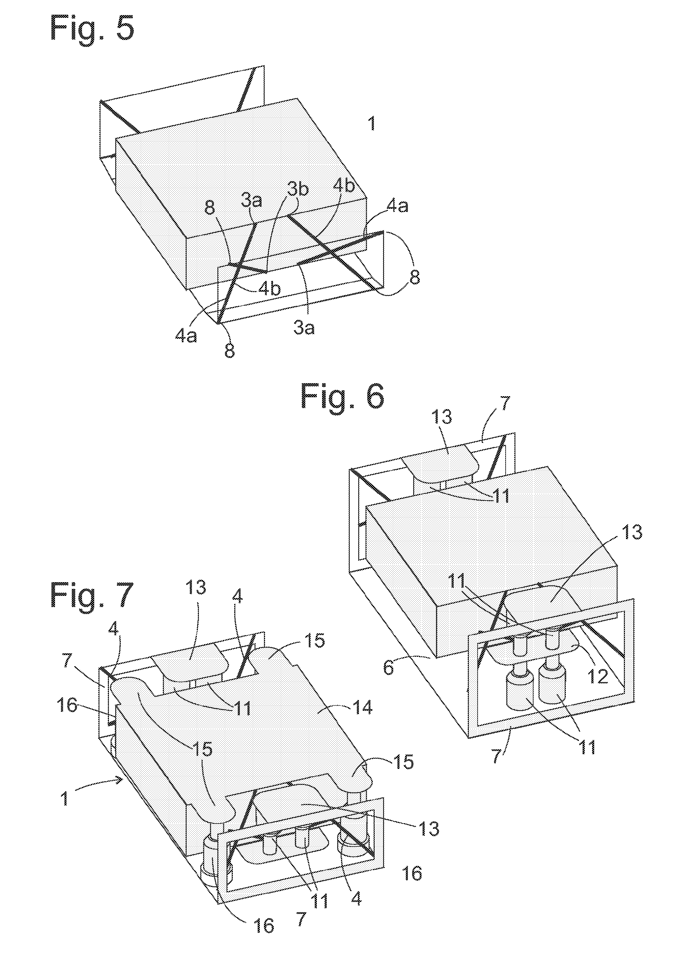

Fig. 5 is a perspective view of a third embodiment of the invention. While in the embodiment of Fig. 3, the springs 4a, 4b have their points of application 3a, 3b at the disk casing 1 close to the corners 3 thereof, and their points of application 8a, 8b in a central region of the sidewalls 7, it is the other way round in the embodiment of Fig. 5. The effects of this arrangement are similar to those of the second embodiment, and the space occupied by the disk drive unit is the same. An important difference of the embodiment of Fig. 5 with regard to the embodiment of Fig. 4 is the greater resistance to rotation.

When the disk drive unit according to one of the previous embodiments has been subject to a shock, the disk casing 1 may continue to vibrate for quite a long time. Although the acceleration applied to the disk casing 1 by the springs 4 may be low enough not to cause damage, it may make proper operation of the disk drive difficult, so that it is desirable to provide vibration absorbers which will quickly dampen such a vibration.

Fig. 6 shows a third example of a disk drive unit provided with vibration absorbers 11. The arrangement of the springs 4a, 4b is identical to that of Fig. 5 and need not be described again. A bottom wall of the disk casing 1 is provided with two flaps 12 which protrude beyond the lateral sides toward the sidewalls 7 of the mounting frame 5. A first pair of vibration absorbers 11 is arranged between a lower side of flaps 12 and the bottom plate 6 of mounting frame 5; a second pair of vibration absorbers 11 extends between the upper side of flap 12 and a web 13 formed at the upper edge of sidewalls 7. The opposing pairs of vibration absorbers 11 are effective to dampen a translation vibration in the direction of axis 2 and any axis perpendicular to axis 2 and torsion vibrations around any axis perpendicular to axis 2.

According to the design shown in Fig. 6, the overall height of the disk drive unit is at least twice that of the vibration absorbers 11, which may be more than required for accommodating the disk casing 1 and the necessary vibration space above and below it.

Fig. 7 shows a second example of a dampened disk drive unit in which the overall height is reduced with respect to that of Fig. 6. In the embodiment of Fig. 7, flaps 12 extending from the bottom side of disk casing 1 and webs 13 extending from the upper edges of sidewalls 7 and vibration absorbers 11 between the two are provided like in the example of Fig. 6. Further a cover plate 14 of disk casing 1 is formed with four flaps 15, and vibration absorbers 16 are provided between these and the bottom plate 6. Since vibration absorbers 11 and 16 overlap in the vertical direction, the overall height of the disk drive unit is reduced.

## Claims

1. A disk drive unit comprising a disk casing (1) in which a disk is adapted to be rotated and a mounting frame (5) resiliently connected to said disk (1) casing by a plurality of springs (4, 4a, 4b), **characterized in that** the springs (4) extend from respective points of application (3, 3a, 3b) at the disk casing (1) towards a common plane which extends through said disk casing (1).

2. The disk drive unit of claim 1, wherein said springs (4, 4a, 4b) extend across the common plane.

3. The disk drive unit of claim 1 or 2, wherein the disk casing (1) has front and rear sides perpendicular to said common plane, and the springs (4, 4a, 4b) extend between front and rear planes defined by said front and rear sides.

4. The disk drive unit of claim 3, wherein the springs (4, 4a, 4b) extend from their respective points of application (3a, 3b) at the disk casing (1) towards an intermediate plane between said front and rear planes.

5. The disk drive unit of claim 3, wherein the springs (4a, 4b) have their respective points of application (3a, 3b) at the disk casing (1) adjacent to one of said front and rear planes and extend from their respective point of application (3a, 3b) towards the adjacent one of said front and rear planes.

6. The disk drive unit of one of the preceding claims, wherein the springs (4a, 4b) of a corner cross each other at least for two corners.

7. The disk drive unit of one of the preceding claims, wherein the common plane is perpendicular to the axis of rotation (2) of the disk.

8. The disk drive unit of claim 7, further comprising a vibration absorber (11, 16) effective to absorb vibrations in the direction of the axis (2) and directions perpendicular to this direction.
